# EUROPÄISCHE PATENTSCHRIFT

(11) **EP 3 832 040 B1**
(45) Veröffentlichungstag und Bekanntmachung des Hinweises auf die Patenterteilung: **24.01.2024**
(21) Anmeldenummer: 20199884.6
(22) Anmeldetag: 02.10.2020
(51) Int. Cl.: E03F 5/02, F16L 9/08, F16L 25/00

(54) **FERTIGTEIL MIT EINEM BETONKÖRPER**
PREFABRICATED PART WITH A CONCRETE BODY
PARTIE PRÉFABRIQUÉE DOTÉ D'UN CORPS DE BÉTON

(30) Priorität: 06.12.2019 DE 202019004970 U
(43) Veröffentlichungstag der Anmeldung: 09.06.2021
(73) Patentinhaber: Predl GmbH, 04924 Bönitz (DE)
(72) Erfinder: PREDL, Manfred, 04895 Schmerkendorf (DE)
(74) Vertreter: Beer & Partner Patentanwälte KG

(56) Entgegenhaltungen:
- EP-A1- 0 556 533
- WO-A1-2019/148218
- DE-A1- 3 713 207
- DE-A1- 10 215 059
- DE-A1-102010 043 758

## Beschreibung

Die Erfindung betrifft ein Fertigteil mit einem Betonkörper, der die Form eines Rohrabschnittes mit zwei Rohrenden und einer Rohrinnenseite aufweist, wobei die Rohrinnenseite durch eine mit dem Betonkörper verbundene Auskleidung aus einem thermoplastischen Kunststoff zumindest bereichsweise ausgekleidet und wenigstens eines der Rohrenden durch ein mit dem Betonkörper verbundenes Formteil aus einem duroplastischen Kunststoff zumindest bereichsweise abgedeckt ist, wobei wenigstens das zumindest bereichsweise abgedeckte Rohrende eine Anschlussform aufweist, um das Rohrende mit einem Rohrende eines weiteren Fertigteiles zu verbinden, und wobei die Auskleidung und das Formteil einander in einem Überlappungsbereich überlappen und dicht miteinander verbunden sind.

Ein gattungsgemäßes Fertigteil ist beispielsweise aus EP 0 556 533 A1 bekannt. Weitere Formteile sind aus DE 37 13 207 A1, DE 102 15 059 A1, WO 2019/148218 A1 und DE 10 2010 043 758 A1 bekannt.

Beim Bau von Schächten, insbesondere Abwasserschächten, werden in der Regel rohrabschnittsförmige Fertigteile aus Beton verwendet, die vor Ort übereinander bzw. aneinander liegend positioniert und miteinander verbunden werden. Herkömmliche Fertigteile für den Schachtbau weisen an ihren Enden deshalb zueinander passende Anschlussformen, wie z.B. Muffen und Spitzenden, auf. Zum Verbinden zweier Fertigteile muss lediglich das Spitzende des einen Fertigteiles in die Muffe des anderen Fertigteiles gesteckt werden, wobei zwischen der Muffe und dem Spitzende eine Dichtung bzw. ein Dichtmittel angeordnet sein kann.

Da Betonoberflächen relativ rau sind und keine besonders hohe Chemikalienbeständigkeit aufweisen, ist es beim Schachtbau besonders vorteilhaft, wenn die rohrabschnittsförmigen Fertigteile aus Beton zumindest an ihrer Rohrinnenseite mit Kunststoff ausgekleidet sind. Eine derartige Kunststoffauskleidung ist bevorzugt möglichst glatt ausgeführt, sodass wenig Ablagerungen daran anhaften können. Weiters kann sie aus einem Material mit hoher Chemikalienbeständigkeit bestehen, sodass die eventuell im Schacht befindlichen aggressiven Chemikalien die Schachtwand nicht angreifen.

Zum Auskleiden eines Fertigteiles aus Beton für den Schachtbau eignen sich prinzipiell sowohl thermoplastische als auch duroplastische Kunststoffe. Beide Arten von Kunststoffen können mit ausreichend glatter Oberfläche hergestellt werden und es gibt sowohl thermoplastische als auch duroplastische Kunststoffe mit hoher Chemikalienbeständigkeit.

Ein einfaches Bauteil, wie eine Auskleidung für die Rohrinnenseite des Fertigteiles, lässt sich besonders kostengünstig aus einem thermoplastischen Kunststoff fertigen, da dieser beispielsweise mittels Extrusion in Bahnform hergestellt, passend gebogen und zu einem Rohr zusammengeschweißt werden kann.

Die Herstellung eines komplizierteren Bauteiles, wie beispielsweise einer Abdeckung für eine Anschlussform (z.B. Muffe oder Spitzenden) eines Fertigteiles aus Beton, die überdies einen großen Innendurchmesser (beispielsweise > 0,6 m) aufweist, aus einem thermoplastischen Kunststoff ist etwas teurer, was daran liegt, dass dafür eine entsprechend große und teure Spritzgussform benötigt wird. Vor allem jedoch weisen thermoplastische Kunststoffe in der Regel einen hohen thermischen Ausdehnungskoeffizienten auf. Derartige Bauteile müssen, wenn sie in einem Außenbereich gelagert werden, vor der Weiterverarbeitung (z.B. Verbindung mit Beton) erst in einen bestimmten Temperaturbereich gebracht werden, um allzu große Formabweichungen zu vermeiden.

Bei einem duroplastischen Kunststoff hingegen ist die Herstellung eines komplizierten Bauteiles nicht wesentlich teurer oder aufwändiger als die Herstellung eines einfachen Bauteiles, solange das Bauteil nicht im Spritzgussverfahren hergestellt wird. Beispielsweise kann ein Bauteil aus duroplastischem Kunststoff hergestellt werden, indem vorerst eine flexible Fasermatte in Form gebracht und diese anschließend mit aushärtendem Harz getränkt wird. Ebenso kann ein Bauteil aus duroplastischem Kunststoff durch das Anformen eines schnell aushärtenden Kunststoffgemisches, beispielsweise in mehreren Schichten, an eine Negativform hergestellt werden. In diesen Fällen liegen die Kosten für die Herstellung eines komplizierten Bauteiles unter den Kosten für die Herstellung desselben Bauteiles aus einem thermoplastischen Kunststoff.

Die Vorteile von duroplastischem Kunststoff liegen also zum einen darin, dass die Herstellung eines komplizierten Bauteiles aus einem duroplastischen Kunststoff günstiger sein kann, als die Herstellung des selben Bauteiles aus einem thermoplastischen Kunststoff. Insbesondere weisen duroplastische Kunststoffe jedoch in der Regel einen wesentlich niedrigeren thermischen Ausdehnungskoeffizienten als thermoplastische Kunststoffe auf, sodass bei Bauteilen aus duroplastischem Kunststoff auch bei der Außenlagerung keine nennenswerten Größenänderungen auftreten.

Der Erfindung liegt die Aufgabe zu Grunde, ein Fertigteil der eingangs genannten Gattung zur Verfügung zu stellen, dessen rohrabschnittsförmiger Betonkörper an seiner Innenseite und an seinen Enden im Bereich von Anschlussformen dicht mit Kunststoff bedeckt ist, und das sich einfach und kostengünstig herstellen lässt.

Gelöst wird diese Aufgabe erfindungsgemäß mit einem Fertigteil, das die Merkmale von Anspruch 1 aufweist.

Bevorzugte und vorteilhafte Ausführungsformen der Erfindung sind Gegenstand der Unteransprüche.

Erfindungsgemäß ist vorgesehen, dass im Überlappungsbereich zwischen dem Formteil und der Auskleidung ein Streifen aus einem thermoplastischem Kunststoff angeordnet ist, dass der Streifen mit dem Formteil über ein oder mehrere Verbindungsmittel, das/die zumindest teilweise sowohl in dem Streifen als auch im Formteil eingebettet bzw. aufgenommen ist/sind, verbunden ist und dass der Streifen mit der Auskleidung über eine Fügeverbindung verbunden ist. Somit lassen sich die Vorteile der Herstellung von Bauteilen aus thermoplastischen Kunststoffen und duroplastischen Kunststoffen, sowie die Materialeigenschaften dieser beiden Kunststofftypen kombinieren. Beispielsweise kann die Auskleidung, als ein im Wesentlichen einfaches Bauteil, kostengünstig hergestellt werden, indem eine extrudierte Bahn aus thermoplastischem Kunststoff in passender Länge und Breite zusammengebogen und zu einem Rohr verschweißt wird.

Das Formteil, als kompliziertes Bauteil, kann beispielsweise hergestellt werden, indem eine vorerst flexible Fasermatte zuerst in Form gebracht und anschließend mit aushärtendem Harz getränkt wird, oder indem ein aushärtendes Kunststoffgemisch, beispielsweise in mehreren Schichten, an eine Negativform angeformt wird. Beide Arten der Herstellung sind dabei kostengünstiger, als die Herstellung des Formteiles als Spritzgussteil aus einem thermoplastischen oder duroplastischen Kunststoff.

Das Formteil und die Auskleidung überlappen einander in einem Überlappungsbereich, wobei der Überlappungsbereich entlang der Innenseite des Formteiles verläuft. Dadurch ist eine rundum dichte Verbindung zwischen dem Formteil und der Auskleidung möglich.

Damit sich die üblicherweise nicht ohne weiteres miteinander verschweißbaren Kunststoffe der Auskleidung und des Formteiles verbinden lassen, ist im Überlappungsbereich zwischen dem Formteil und der Auskleidung ein Streifen aus einem thermoplastischen Kunststoff angeordnet. Der Streifen ist mit dem Formteil über ein oder mehrere Verbindungsmittel verbunden, das/die zumindest teilweise sowohl im Streifen als auch im Formteil eingebettet bzw. aufgenommen ist/sind. Außerdem ist der Streifen mit der Auskleidung über eine Fügeverbindung verbunden. Die Fügeverbindung kann beispielsweise eine Schweißverbindung sein, da sowohl der Streifen als auch die Auskleidung aus einem thermoplastischen Kunststoff bestehen. Der Streifen kann im Rahmen der Erfindung auch zusätzlich zum Verschweißen oder stattdessen mit der Auskleidung verklebt sein.

Beim Herstellen des Fertigteiles können das bereits mit dem Streifen über ein oder mehrere Verbindungsmittel verbundene Formteil und die Auskleidung in eine Gießform eingelegt werden. Anschließend wird der fließfähige Beton in die Gießform eingebracht. Sobald der Beton ausgehärtet ist, sind das Formteil und die Auskleidung teilweise in dem Betonkörper eingebettet bzw. mit diesem verbunden.

Die Auskleidung und/oder das Formteil können Verankerungselemente, wie Haftbrücken, aufweisen, um sie noch fester mit dem ausgehärteten Betonkörper zu verbinden. Beispielsweise können die Haftbrücken der Auskleidung direkt an der Auskleidung ausgeformt, z.B. beim Extrudieren mitgeformt oder im Zuge der Herstellung der Auskleidung befestigt, werden. Beim Herstellen des Formteiles kann insbesondere ein Granulat, vorzugsweise Sand, insbesondere Quarzsand, in das noch nicht ausgehärtete Material des Formteiles eingebettet bzw. eingedrückt werden, sodass das Granulat Haftbrücken zum Verbinden des Formteiles mit dem Betonkörper bildet.

Vorzugsweise wird die Fügeverbindung zwischen dem Streifen und der Auskleidung erst erzeugt, nachdem der Betonkörper ausgehärtet ist. Dadurch lassen sich die Auskleidung und das Formteil in der Gießform vor oder während des Einbringens des Betons besser positionieren und ausrichten.

Vorzugsweise wird das Verbindungsmittel bzw. werden die Verbindungsmittel in den Streifen eingebettet, indem es/sie beim bzw. unmittelbar nach dem Erzeugen des Streifens, beispielsweise durch Strangpressen bzw. Extrudieren, in den erwärmten und verformbaren Streifen eingedrückt bzw. eingepresst wird/werden. Das Eindrücken bzw. Einpressen erfolgt beispielsweise mit einer Walze. Möglich ist jedoch auch, das/die Verbindungsmittel erst nachträglich in den Streifen einzudrücken, beispielsweise indem dieser dafür noch einmal erwärmt und formbar gemacht wird. Wichtig ist, dass das/die Verbindungsmittel nicht zur Gänze in den Streifen gedrückt werden, sondern Teile bzw. Abschnitte davon außerhalb des Streifens angeordnet sind und vorzugsweise vom Streifen abstehen.

Im Rahmen der Erfindung ist insbesondere vorgesehen, dass das/die Verbindungsmittel mit dem Formteil verbunden wird/werden, indem der bereits mit dem/den Verbindungsmittel/n versehene Streifen an das noch nicht ausgehärtete Formteil aus duroplastischem Kunststoff angelegt wird, bzw. indem die vom Streifen abstehenden Teile des/der Verbindungsmittel/s von dem noch nicht ausgehärteten duroplastischen Kunststoff umschlossen werden. Das/die Verbindungsmittel ist/sind mit dem Formteil insbesondere durch Einbetten in das noch nicht ausgehärtete Formteil bei der Herstellung des Formteiles verbunden. Der Streifen wird beispielsweise an die in Form gebrachte Fasermatte angelegt, bevor oder während diese mit Harz getränkt wird, sodass auch das/die Verbindungsmittel mit Harz getränkt bzw. in dem Harz eingebettet werden. Ebenso ist es denkbar, dass der Streifen in eine Negativform eingelegt wird, bevor ein aushärtendes Kunststoffgemisch an diesen angeformt wird und das/die Verbindungsmittel von dem Kunststoffgemisch umschlossen werden, bevor dieses aushärtet. In beiden Fällen ist ein Teil des/der Verbindungsmittel/s sowohl im Streifen als auch im Formteil aufgenommen und verankert, sodass nach dem Aushärten des Harzes bzw. des Kunststoffgemisches eine feste und dichte Verbindung zwischen dem Streifen und dem Formteil gebildet ist.

Die Verbindungsmittel sind in einer besonders bevorzugten Ausführungsform Fasern oder Fäden, insbesondere aus Kunststoff und/oder einem natürlichen Material, beispielsweise aus Baumwolle. Die Fasern oder Fäden können in einem textilen Flächengebilde, beispielsweise einem Gewebe, einem Filz oder einem Vlies, angeordnet sein.

Ebenso ist im Rahmen der Erfindung möglich, dass das/die Verbindungsmittel ein Stift bzw. Stifte und/oder ein bzw. mehrere Bügel und/oder ein Stab bzw. Stäbe und/oder ein Draht bzw. Drähte und/oder ein bzw. mehrere Gitter, ist/sind. Ein derartiges bzw. derartige Verbindungsmittel besteht/bestehen insbesondere aus Kunststoff oder aus Metall. Auch eine Kombination aus mehreren Verbindungsmitteln, ggf. aus unterschiedlichen Materialien, ist möglich.

Vorzugsweise sind das Formteil und die Auskleidung mit dem Betonkörper durch Anformen, insbesondere Angießen, eines fließfähigen Materials des Betonkörpers an das Formteil und die Auskleidung beim Herstellen des Betonkörpers verbunden.

Die Anschlussform ist bevorzugt eine Muffe, die von dem Formteil zumindest bereichsweise auskleidet ist, oder ein Spitzende, das von dem Formteil zumindest bereichsweise ummantelt ist. Als Muffe und Spitzende werden im Sinne der Erfindung all jene Rohranschlussformen angesehen, die in axialer Richtung des Rohrabschnittes ineinandergesteckt werden. Die Muffe bzw. das Spitzende werden vom Formteil insbesondere so weit abgedeckt oder ummantelt, dass bei Bestehen einer Verbindung aus einer derartigen Muffe und einem derartigen Spitzende, sowie ggf. einem dazwischen angeordneten Dichtmittel, kein Abschnitt des Betonkörpers mit einer im Schacht befindlichen Flüssigkeit in Kontakt kommen kann.

In einer bevorzugten Ausführungsform weist das Formteil, das sich von der Rohrinnenseite in Richtung einer Rohraußenseite erstreckt und im Bereich der Anschlussform an der Oberfläche des Betonkörpers angeordnet ist, am äußeren Rand einen Abschlussrand auf. Dieser ragt in einem Winkel von der stirnseitigen Oberfläche des Betonkörpers in das Innere des Betonkörpers, und verläuft ein Stück in den Betonkörper hinein. Der Abschlussrand bildet eine Art Wassersperre und verhindert, dass Grundwasser, das von außen her in einen zwischen zwei miteinander verbundenen Fertigteilen bestehenden Spalt gedrückt wird, zwischen das Formteil und den Betonkörper eindringen kann.

Besonders bevorzugt ist es, wenn der Betonkörper an beiden Enden eine Anschlussform, beispielsweise eine Muffe und/oder ein Spitzende, aufweist. Vorzugsweise sind bei einer derartigen Ausführungsform beide Enden zumindest bereichsweise mit einem Formteil abgedeckt, wobei beide Formteile - wie bereits beschrieben - mit der Auskleidung dicht verbunden sind.

Die Formteile sind vorzugsweise auf die gleiche Art und Weise am Betonkörper angeordnet.

Der Betonkörper weist vorzugsweise die Form eines runden Rohrabschnittes mit einem kreisförmigen Querschnitt auf. Er kann im Rahmen der Erfindung jedoch auch einen eckigen, insbesondere quadratischen, Querschnitt, vorzugsweise mit abgerundeten Ecken, oder irgendeinen anderen Querschnitt, beispielsweise einen eiförmigen Querschnitt, aufweisen. Die Formteile sind jeweils an die Form des Querschnittes des Betonkörpers angepasst, und weisen dementsprechend auch eine im Wesentlichen kreisförmige, ei-förmige, rechteckige bzw. andere Form auf.

Der Streifen bzw. ggf. die Streifen sind insbesondere entlang der Rohrinnenseite des Betonkörpers verlaufend angeordnet, da in diesem Fall der/die Streifen in einem Strangpressverfahren hergestellt bzw. extrudiert und ringförmig (oder in eine andere, an den Querschnitt des Betonteiles angepasste Form) zusammengebogen werden kann/können.

Als duroplastischer Kunststoff wird im Rahmen der Erfindung vorzugsweise Polyharnstoff verwendet. Als thermoplastischer Kunststoff wird im Rahmen der Erfindung vorzugsweise Polyethylen (PE) oder Polypropylen (PP) verwendet. Diese Kunststoffe weisen alle eine hohe Chemikalienbeständigkeit auf. Die Auskleidung und der bzw. ggf. die Streifen können aus dem selben thermoplastischen Kunststoff oder aus unterschiedlichen thermoplastischen Kunststoffen bestehen, solange diese thermoplastischen Kunststoffe verschweißbar sind.

Im Rahmen der Erfindung ist auch ein Schacht vorgesehen, der aus zwei oder mehr als zwei erfindungsgemäßen Fertigteilen besteht. Wenigstens zwei aneinander anschließende Fertigteile sind dabei über die Anschlussformen miteinander verbunden. Vorzugsweise sind die Anschlussformen bei einem derartigen Schacht Muffen und Spitzenden, sodass die einzelnen Fertigteile miteinander über Muffe-Spitzende-Verbindungen, mit ggf. darin aufgenommenen Dichtmitteln, verbunden sind. Der Schacht ist beispielsweise ein vertikal oder horizontal verlaufender Schacht, kann im Rahmen der Erfindung aber auch eine Rohrleitung sein.

Als Dichtmittel zwischen zwei benachbarten Anschlussformen, insbesondere zwischen Muffe und Spitzende, kann beispielsweise eine Dichtschnur oder eine Art Bitumendichtband dienen, die bzw. das zwischen den Anschlussformen angeordnet und beim Verbinden der Anschlussformen, insbesondere des Spitzendes mit der Muffe, zwischen diesen eingequetscht wird.

Besonders bevorzugt sind im Rahmen der Erfindung jedoch Ausführungsformen, bei denen in eines der Formteile, beispielsweise in das Formteil im Bereich der Muffe oder in das Formteil im Bereich des Spitzendes oder in beide Formteile eine als Dichtmittel dienende Dichtung eingearbeitet ist. Eine derartige Dichtung bzw. derartige Dichtungen kann/können ein- oder mehrteilig sein und/oder aus einem anderen Kunststoff, beispielsweise einem Elastomer, bestehen und/oder bereits beim Herstellen des Formteiles miteingegossen, eingebettet oder angeformt werden.

Das Dichtmittel verhindert ein Eindringen von Wasser durch den Spalt zwischen den beiden Fertigteilen in das Innere der mit Kunststoff ausgekleideten, miteinander verbundenen Fertigteile.

Zwischen zwei Fertigteilen des Schachtes kann im Rahmen der Erfindung auch ein Dämpfelement, wie beispielsweise ein zwischen den Anschlussformen aufgenommener Lastabtragring, angeordnet sein. Vertikal auf die Fertigteile wirkende, temporäre Kraftspitzen bzw. Kraftstöße, die beispielsweise aufgrund von über den Schacht fahrenden Fahrzeugen auftreten, werden dadurch abgeschwächt. Die Gefahr, dass aufgrund der Kraftspitzen Risse in den Fertigteilen entstehen, wird dadurch reduziert.

Ein erfindungsgemäßes Fertigteil kann an einem Ende auch durch einen Schachtboden verschlossen sein. Vorzugsweise bedeckt die Auskleidung bei einem derartigen Fertigteil nicht nur die Rohrinnenseite, sondern auch die nach innen gerichtete Seite des Schachtbodens.

Möglich ist im Rahmen der Erfindung auch, dass bei einem erfindungsgemäßen Fertigteil mit Schachtboden oder einem erfindungsgemäßen Fertigteil mit zwei offenen Rohrenden Rohranschlussöffnungen vorgesehen sind, die in ein Inneres des Betonkörpers münden. In diesem Fall weist die Auskleidung entsprechende Öffnungen im Bereich der Rohranschlussöffnungen auf.

Weitere Einzelheiten, Merkmale und Vorteile der Erfindung ergeben sich aus der nachstehenden Beschreibung unter Bezugnahme auf die angeschlossenen Zeichnungen, in denen bevorzugte Ausführungsformen dargestellt sind. Es zeigt:
- Fig. 1: einen Längsschnitt durch zwei miteinander verbundene, erfindungsgemäße Fertigteile,
- Fig. 2: eine vergrößerte Schnittansicht, die ein Detail A der Verbindung der in Fig. 1 dargestellten Fertigteile zeigt,
- Fig. 3: eine vergrößerte Schnittansicht, die ein Detail B der Verbindung zwischen dem Formteil, dem Streifen und der Auskleidung aus Fig. 2 zeigt, und
- Fig. 4: eine weitere vergrößerte Schnittansicht, die das Detail A der Verbindung der in Fig. 1 dargestellten Fertigteile gemäß einer alternativen Ausführungsform zeigt.

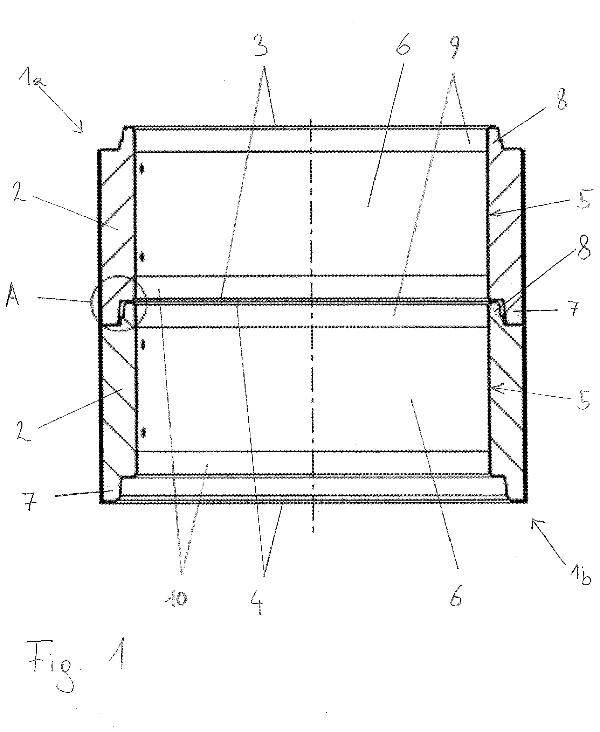

Fig. 1 zeigt zwei mit ihren Enden ineinander gesteckte, erfindungsgemäße Fertigteile 1a, 1b, die im Wesentlichen gleich aufgebaut sind. Jeder der erfindungsgemäßen Fertigteile 1a, 1b weist einen Betonkörper 2 in Form eines Rohrabschnittes mit zwei Rohrenden 3, 4 und einer Rohrinnenseite 5 auf.

An der Rohrinnenseite 5 des Fertigteiles 1a, 1b ist eine mit dem Betonkörper 2 verbundene Auskleidung 6 angeordnet, die aus einem thermoplastischen Kunststoff gefertigt ist. Um die Auskleidung 6 herzustellen, wird vorzugsweise eine extrudierte Kunststoffbahn passend abgelängt, rohrförmig gebogen und entlang einer nicht dargestellten, axial verlaufenden Naht verschweißt oder verklebt.

Die Rohrenden 3, 4 der Fertigteile 1a, 1b weisen jeweils eine Anschlussform auf, die zum Verbinden mit einer Anschlussform eines angrenzenden Fertigteiles 1b, 1a geeignet ist. In der beispielhaften Ausführungsform ist an dem einen Rohrende 3 eines jeden Fertigteiles 1a, 1b eine Muffe 7 und an dem anderen Rohrende 4 ein dazu passendes Spitzende 8 ausgeführt.

In der dargestellten Ausführungsform sind die Rohrenden 3, 4 jedes Fertigteiles 1a, 1b zumindest bereichsweise von einem Formteil 9, 10 aus einem duroplastischen Kunststoff abgedeckt.

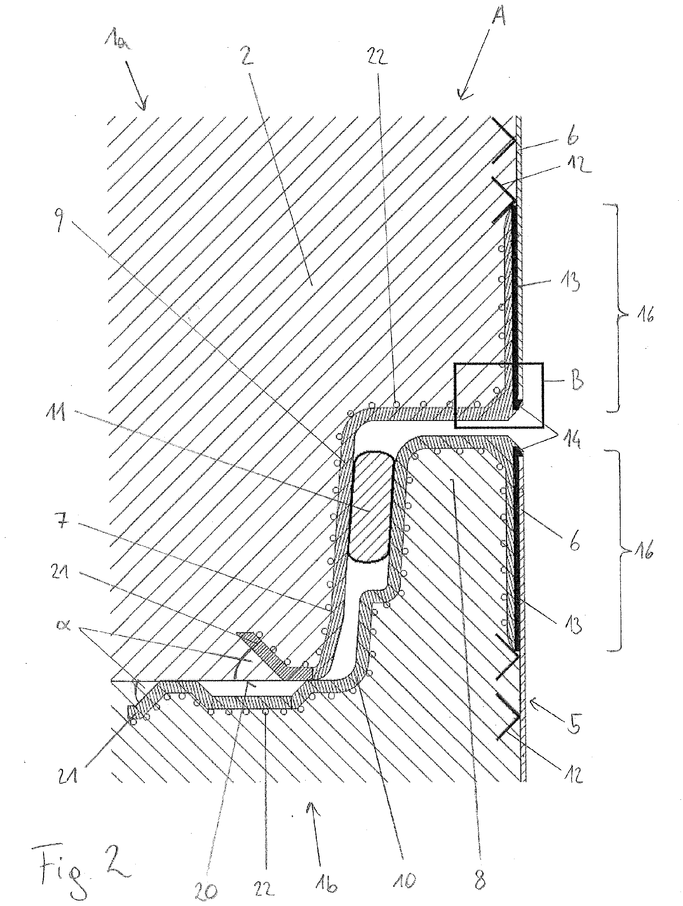

Fig. 2 zeigt ein Detail A der Muffe-Spitzende-Verbindung zwischen den zwei in Fig. 1 dargestellten, erfindungsgemäßen Fertigteilen 1a, 1b. Das Spitzende 8 des in Fig. 1 unten dargestellten Fertigteiles 1b ist dabei in der Muffe 7 des in Fig. 1 oben dargestellten Fertigteiles 1a aufgenommen.

In Fig. 2 ist zu sehen, dass die Muffe 7 des oberen Fertigteiles 1a durch das Formteil 9, das im Bereich der Muffe 7 angeordnet ist, auskleidet ist. Das in dieser Muffe 7 aufgenommene Spitzende 8 des unteren Fertigteiles 1b ist von dem Formteil 10, das im Bereich des Spitzendes 8 angeordnet ist, ummantelt.

Zwischen dem Spitzende 8 des unteren Fertigteiles 1b und der Muffe 7 des oberen Fertigteiles 1a ist ein Spalt für die Aufnahme eines Dichtmittels 11 gebildet, das in der dargestellten Ausführungsform eine in den Spalt eingepresste Dichtschnur ist.

Der Betonkörper 2 jedes Fertigteiles 1a, 1b ist an die jeweilige Auskleidung 6 und die jeweiligen Formteile 9, 10 angeformt, insbesondere angegossen. Die Auskleidung 6 ist jeweils zusätzlich über Haftbrücken 12 im jeweiligen Betonkörper 2 verankert.

Die Auskleidung 6 und die Formteile 9, 10 überlappen einander jeweils in einem kreisförmig entlang der Rohrinnenseite 5 verlaufenden Überlappungsbereich 16.

Bei den Fertigteilen 1a, 1b ist in den Überlappungsbereichen 16 zwischen der Auskleidung 6 und dem Formteil 9 im Bereich der Muffe 7 bzw. zwischen der Auskleidung 6 und dem Formteil 10 im Bereich des Spitzendes 8 jeweils ein kreisförmig verlaufender Streifen 13 angeordnet. Die Streifen 13 bestehen aus einem thermoplastischen Kunststoff, vorzugsweise aus dem gleichen thermoplastischen Kunststoff wie die Auskleidungen 6.

Die Streifen 13 sind mit der Auskleidung 6 jeweils entlang von kreisförmig verlaufenden Schweißnähten 14 verschweißt und können zusätzlich oder stattdessen flächig mit den Auskleidungen 6 verklebt sein.

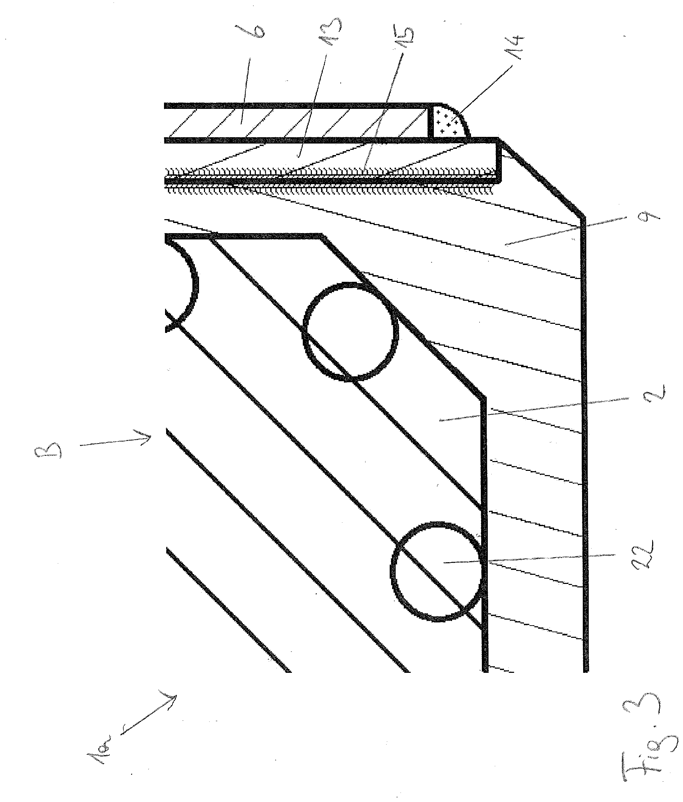

Fig. 3 zeigt ein Detail B aus Fig. 2 im Überlappungsbereich 16 im Bereich der Muffe 7 des oberen Fertigteiles 1a. Im Überlappungsbereich 16 ist das Formteil 9 mit dem Streifen 13 und der Streifen 13 mit der Auskleidung 6 verbunden.

Die Formteile 9, 10, Streifen 13 und Auskleidungen 6 sind in gleicher Weise auch im Bereich des Spitzendes 8 des oberen Fertigteiles 1a und im Bereich der Muffe 7 und des Spitzendes 8 des unteren Fertigteiles 1b miteinander verbunden.

Die Auskleidung 6 ist mit dem Streifen 13 über die Schweißnaht 14 verbunden. Da sowohl der Streifen 13 als auch die Auskleidung 6 aus einem, vorzugsweise demselben, thermoplastischen Kunststoff bestehen, lassen sie sich einfach und auf bekannte Art und Weise dicht miteinander verschweißen.

Der Streifen 13 und der Formteil 9 sind über Verbindungsmittel in Form von Fasern 15 miteinander verbunden, die als Gewebebahn angeordnet sind. Zumindest einige der Fasern 15 sind sowohl im Formteil 9 als auch im Streifen 13 aufgenommen bzw. eingebettet. In der dargestellten Ausführungsform sind die Verbindungsmittel Fasern 15, im Rahmen der Erfindung könne jedoch auch andere Verbindungsmittel, wie Stifte, ein Gitter, etc. verwendet werden.

Vorzugsweise werden die Fasern 15 in Form der Gewebebahn bereits bei der Herstellung des Streifens 13 in diesen eingedrückt bzw. eingepresst. Beispielsweise werden die Fasern 15 direkt nach dem Strangpressen des Streifens 13 zumindest teilweise in diesen hineingewalzt, solange die Temperatur des Streifens 13 noch über der Verformungstemperatur des thermoplastischen Kunststoffes des Streifens 13 liegt.

Ein derart mit den Fasern 15 versehener Streifen 13 wird vorzugsweise bei der Herstellung des Formteiles 9 - und in gleicher Art und Weise auch bei der Herstellung des anderen Formteiles 10 - an diesem angeordnet bzw. in dieses eingedrückt, bevor der duroplastische Kunststoff des Formteiles 9, 10 ausgehärtet ist. Die Fasern 15 sind nach dem Aushärten des duroplastischen Kunststoffes zumindest abschnittsweise im Formteil 9, 10 aufgenommen und verankert, sodass eine dichte Verbindung zwischen dem Formteil 9, 10 und dem Streifen 13 gebildet ist.

Statt der Fasern 15 oder zusätzlich dazu können im Rahmen der Erfindung auch andere Verbindungselemente wie Stifte, Bügel oder Stäbe bzw. eine Art Geflecht oder eine Gitterstruktur aus Kunststoff oder aber auch aus Metall verwendet werden. Wesentlich ist, dass die verwendeten Verbindungselemente sowohl im Formteil 9, 10 als auch im Streifen 13 eingebettet werden können.

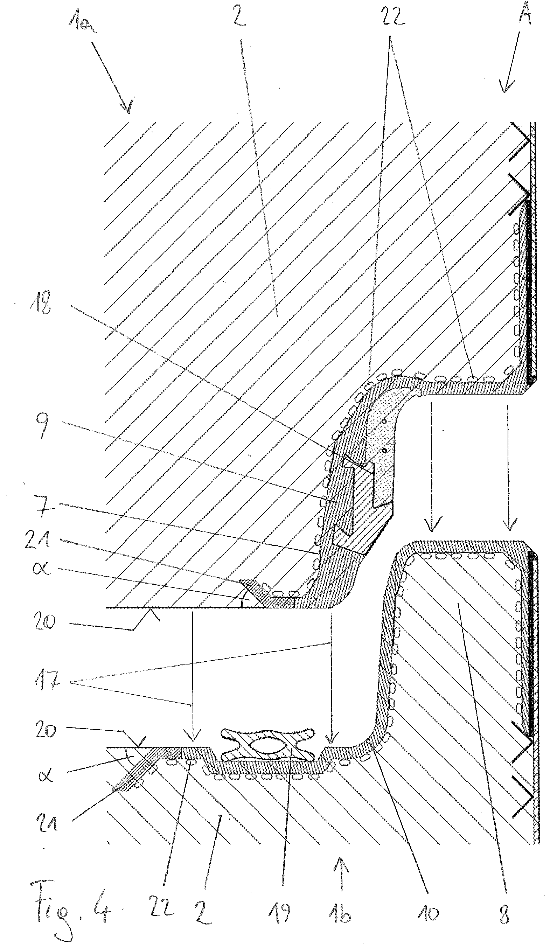

Fig.4 zeigt das Detail A der Muffe-Spitzende-Verbindung zwischen den zwei in Fig. 1 dargestellten, erfindungsgemäßen Fertigteilen 1a, 1b gemäß einer alternativen Ausführungsform. Das Spitzende 8 des in Fig. 1 unten dargestellten Fertigteiles 1b ist dabei noch nicht ganz in der Muffe 7 des in Fig. 1 oben dargestellten Fertigteiles 1a aufgenommen. Die Pfeile 17 deuten an, dass die Formteile 1a, 1b noch weiter aneinander angenähert werden müssen, um die Verbindung zwischen der Muffe 7 und dem Spitzende 8 auszubilden.

In das Formteil 9 der Muffe 7 ist eine Dichtung 18 eingearbeitet, die als Dichtmittel 11 dient. Die Dichtung 18 kann, wie im dargestellten Fall, aus mehreren Dichtkörpern, oder aber nur aus einem einzelnen Dichtkörper bestehen. Die Dichtung 18 ist vorzugsweise aus einem elastischen Kunststoff bzw. elastischen Kunststoffen, insbesondere Elastomer/en, gebildet.

Vorzugsweise wird die Dichtung 18 mit dem Formteil 9 verbunden, indem sie beim Herstellen des Formteiles 9 in dieses eingegossen, eingebettet, eingeformt oder an dieses angeformt wird. Bei der dargestellten Ausführungsform ist das Formteil 9 der Muffe 7 ein Spritzgussteil, wobei die Dichtung 18 zuerst in die Spritzgussform eingelegt und dann der duroplastische Kunststoff in die Form eingespritzt wurde. Nach dem Aushärten des Formteiles 9 ist die Dichtung 18 mit diesem verbunden.

Beim Zusammenstecken der Muffe 7 und des Spitzendes 8 wird die Dichtung 18 zwischen dem Formteil 9 der Muffe 7 und dem Formteil 10 des Spitzendes 8 eingequetscht und dichtet einen zwischen den Fertigteilen 1a, 1b gebildeten Spalt ab.

In Fig. 4 ist außerdem ein als Lastabtragring ausgeführtes Dämpfelement 19 dargestellt, dass den oben dargestellten Fertigteil 1a bei zusammengesetzter Muffe-Spitzende-Verbindung abstützt. Das Dämpfelement 19 dämpft Stöße ab, die beispielsweise aufgrund von temporär auftretenden Vertikalkräften vom oben dargestellten Fertigteil 1a auf das unten dargestellte Fertigteil 1b übertragen werden.

Möglich sind im Rahmen der Erfindung auch Ausführungsformen, bei denen die Dichtung 18 im Formteil 10 des Spitzendes 8 eingeformt ist bzw. bei denen in beiden Formteilen 9, 10 Dichtungen 18 eingeformt sind.

In den dargestellten Ausführungsformen weisen die Formteile 9, 10 zusätzliche Haftbrücken 22 auf, die durch ein Granulat, beispielsweise Sand, gebildet sind, welches bei oder nach der Herstellung der Formteile 9, 10 mit diesen verbunden wird. Beim Anformen des Betonkörpers 2 an das jeweilige Formteil 9, 10 werden die Haftbrücken 22 vom fließfähigen Beton umschlossen, sodass das Formteil 9, 10 über die Haftbrücken 22 im ausgehärteten Beton besser verankert ist.

Die Formteile 9, 10 verlaufen jeweils von der Rohrinnenseite 5 in Richtung einer nicht dargestellten Rohraußenseite. Das Formteil 9, 10 endet zwischen dem vom Formteil 10 ummantelten Spitzende 8 bzw. der vom Formteil 9 ausgekleideten Muffe 7 und der Rohraußenseite in einem Abschlussrand 22. Der Abschlussrand 22 verläuft anders als das restliche Formteil 9, 10, nicht an der Oberfläche 21 des Betonkörpers 2, sondern ragt in einem Winkel α von der Oberfläche 21 in das Innere des Betonkörpers 2 und ist von diesem umschlossen.

### Bezugszeichenliste

- 1: (a, b) Fertigteil
- 2: Betonkörper
- 3: Rohrende
- 4: anderes Rohrende
- 5: Rohrinnenseite
- 6: Auskleidung
- 7: Muffe
- 8: Spitzende
- 9: Formteil (Muffe)
- 10: Formteil (Spitzende)
- 11: Dichtmittel
- 12: Haftbrücke (Auskleidung)
- 13: Streifen
- 14: Schweißnaht
- 15: Fasern
- 16: Überlappungsbereich
- 17: Pfeile
- 18: Dichtung
- 19: Dämpfelement
- 20: Oberfläche
- 21: Abschlussrand
- 22: Haftbrücke (Formteil)

- α: Winkel

## Patentansprüche

1. Fertigteil (1a, 1b) mit einem Betonkörper (2), der die Form eines Rohrabschnittes mit zwei Rohrenden (3, 4) und einer Rohrinnenseite (5) aufweist, wobei die Rohrinnenseite (5) durch eine mit dem Betonkörper (2) verbundene Auskleidung (6) aus einem thermoplastischen Kunststoff zumindest bereichsweise ausgekleidet und wenigstens eines der Rohrenden (3, 4) durch ein mit dem Betonkörper (2) verbundenes Formteil (9, 10) aus einem duroplastischen Kunststoff zumindest bereichsweise abgedeckt ist, wobei wenigstens das zumindest bereichsweise abgedeckte Rohrende (3, 4) eine Anschlussform aufweist, um das Rohrende (3, 4) mit einem Rohrende (4, 3) eines weiteren Fertigteiles (1b, 1a) zu verbinden, und wobei die Auskleidung (6) und das Formteil (9, 10) einander in einem Überlappungsbereich (16) überlappen und dicht miteinander verbunden sind, **dadurch gekennzeichnet, dass** im Überlappungsbereich (16) zwischen dem Formteil (9, 10) und der Auskleidung (6) ein Streifen (13) aus einem thermoplastischem Kunststoff angeordnet ist, dass der Streifen (13) mit dem Formteil (9, 10) über ein oder mehrere Verbindungsmittel, das/die zumindest teilweise sowohl in dem Streifen (13) als auch im Formteil (9, 10) eingebettet bzw. aufgenommen ist/sind, verbunden ist und dass der Streifen (13) mit der Auskleidung (6) über eine Fügeverbindung verbunden ist.

2. Fertigteil nach Anspruch 1, **dadurch gekennzeichnet, dass** der Streifen (13) mit der Auskleidung (6) über eine Schweißnaht (14) verbunden ist.

3. Fertigteil nach Anspruch 1 oder 2, **dadurch gekennzeichnet, dass** die Verbindungsmittel Fasern (15) oder Fäden, vorzugsweise aus einem künstlichen Material und/oder einem natürlichen Material, insbesondere aus Baumwolle, sind, und dass gegebenenfalls die als Fasern (15) oder Fäden ausgebildeten Verbindungsmittel in einem textilen Flächengebilde, beispielsweise einem Gewebe, einem Filz oder einem Vlies, angeordnet sind.

4. Fertigteil nach Anspruch 1 oder 2, **dadurch gekennzeichnet, dass** das/die Verbindungsmittel ein Stift bzw. Stifte und/oder ein bzw. mehrere Bügel und/oder ein Stab bzw. Stäbe und/oder ein Draht bzw. Drähte und/oder ein bzw. mehrere Gitter, ist/sind, und dass gegebenenfalls das/die Verbindungsmittel aus Kunststoff oder aus Metall besteht/bestehen, bzw. dass ggf. manche der Verbindungsmittel aus Kunststoff und manche aus Metall bestehen.

5. Fertigteil nach einem der Ansprüche 1 bis 4, **dadurch gekennzeichnet, dass** die Anschlussform eine Muffe (7) ist, die von dem Formteil (9) zumindest bereichsweise, vorzugsweise komplett, auskleidet ist, oder dass die Anschlussform ein Spitzende (8) ist, das von dem Formteil (10) zumindest bereichsweise, vorzugsweise komplett, ummantelt ist.

6. Fertigteil nach einem der Ansprüche 1 bis 5, **dadurch gekennzeichnet, dass** sich das Formteil (9, 10) von der Rohrinnenseite (5) in Richtung einer Rohraußenseite erstreckt, dass es im Bereich der Anschlussform an der Oberfläche des Betonkörpers (2) angeordnet ist, und dass es anschließend daran, zwischen der Anschlussform und der Rohraußenseite, einen in den Betonkörper (2) verlaufenden, in einem Winkel (α) von der Oberfläche (20) des Betonkörpers (2) in das Innere des Betonkörpers (2) ragenden Abschlussrand (21) aufweist.

7. Fertigteil nach einem der Ansprüche 1 bis 6, **dadurch gekennzeichnet, dass** das zusätzlich zu dem einen, zumindest bereichsweise von einem Formteil (9, 10) abgedeckten Rohrende (3, 4) auch das andere Rohrende (4, 3) zumindest bereichsweise von einem weiteren Formteil (10, 9) aus einem duroplastischen Kunststoff abgedeckt ist, dass das andere Rohrende (4, 3) eine weitere Anschlussform aufweist, um das andere Rohrende (4, 3) mit einem Rohrende (4, 3) eines weiteren Fertigteiles (1b, 1a) zu verbinden, und dass die Auskleidung (6) und das weitere Formteil (10, 9) dicht miteinander verbunden sind.

8. Fertigteil nach Anspruch 7, **dadurch gekennzeichnet, dass** das weitere Formteil (10, 9) und die Auskleidung (6) entlang eines weiteren Überlappungsbereiches (16) überlappen, dass in dem weiteren Überlappungsbereich (16) zwischen dem weiterem Formteil (10, 9) und der Auskleidung (6) ein weiterer Streifen (13) aus einem thermoplastischem Kunststoff angeordnet ist, und dass der weitere Streifen (13) auf die gleiche Art und Weise wie der erste Streifen (13) mit dem weiteren Formteil (10, 9) und mit der Auskleidung (6) verbunden ist.

9. Fertigteil nach Anspruch 7 oder 8, **dadurch gekennzeichnet, dass** die weitere Anschlussform eine Muffe (7) ist, die von dem weiteren Formteil (10, 9) zumindest bereichsweise, vorzugsweise komplett, ausgekleidet ist, oder dass die weitere Anschlussform ein Spitzende (8) ist, das von dem weiteren Formteil (10, 9) zumindest bereichsweise, vorzugsweise komplett, ummantelt ist.

10. Fertigteil nach einem der Ansprüche 1 bis 9, **dadurch gekennzeichnet, dass** der bzw. ggf. die Streifen (13) im Bereich des Rohrendes (3, 4) bzw. ggf. der Rohrenden (3, 4) an der Rohrinnenseite (5) angeordnet ist/sind.

11. Fertigteil nach einem der Ansprüche 1 bis 10, **dadurch gekennzeichnet, dass** der duroplastische Kunststoff ein Polyharnstoff und/oder der thermoplastische Kunststoff ein Polyethylen oder Polypropylen ist.

12. Fertigteil nach einem der Ansprüche 1 bis 11, **dadurch gekennzeichnet, dass** die Auskleidung (6) und der bzw. ggf. die Streifen (13) aus denselben thermoplastischen Kunststoffen bestehen.

13. Fertigteil nach einem der Ansprüche 1 bis 12, **dadurch gekennzeichnet, dass** der bzw. ggf. die Formteil/e (9, 10) Haftbrücken (12, 22) aufweist bzw. aufweisen, die in dem ausgehärteten Betonkörper (2) verankert sind, wobei die Haftbrücken vorzugsweise aus einem mit dem/den Formteil/en (9, 10) verbundenen Granulat, beispielsweise Sand, gebildet sind.

14. Schacht, insbesondere Abwasserschacht, mit wenigstens zwei aneinander angeordneten, über jeweils eine Anschlussform miteinander verbundenen Fertigteilen (1a, 1b), **dadurch gekennzeichnet, dass** die zwei aneinander angeordneten Fertigteile (1a, 1b) nach einem der Ansprüche 1 bis 13 ausgeführt sind, wobei vorzugsweise wenigstens eines der aneinander angeordneten Fertigteile (1a, 1b) eine Muffe (7) und das andere der aneinander angeordneten Fertigteile (1b, 1a) ein darin aufgenommenes Spitzende (8) aufweist.

15. Schacht nach Anspruch 14, **dadurch gekennzeichnet, dass** wenigstens eines der aneinander angeordneten Fertigteile (1a, 1b) eine Muffe (7) und das andere der aneinander angeordneten Fertigteile (1b, 1a) ein darin aufgenommenes Spitzende (8) aufweist, dass ein Dichtmittel (11), beispielsweise eine Dichtschnur, zwischen Muffe (7) und Spitzende (8) angeordnet ist, und dass vorzugsweise das Dichtmittel (11) wenigstens eine Dichtung (18) aufweist, die in das Formteil (9) der Muffe (7) und/oder in das Formteil (10) des Spitzendes (8) eingeformt bzw. angeformt ist/sind.

## Claims

1. Prefabricated part (1a, 1b) with a concrete body (2) which has the shape of a pipe section with two pipe ends (3, 4) and an inner pipe side (5), wherein the inner pipe side (5) is lined at least in some areas by a lining (6) made of thermoplastic material connected to the concrete body (2) and at least one of the pipe ends (3, 4) is covered at least in some areas by a molded part (9, 10) made of thermosetting plastic material connected to the concrete body (2), wherein at least the pipe end (3, 4), which is covered at least in some areas, has a connecting joint in order to connect the pipe end (3, 4) to one pipe end (4, 3) of a further prefabricated part (1b, 1a), and wherein the lining (6) and the molded part (9, 10) overlap each other in an overlap area (16) and are connected to each other in a sealed manner, **characterized in in that** a strip (13) made of a thermoplastic material is arranged in the overlap area (16) between the molded part (9, 10) and the lining (6), **in that** the strip (13) is connected to the molded part (9, 10) by one or more fastener/s, which is/are at least partially embedded respectively accommodated both in the strip (13) and in the molded part (9, 10) and **in that** the strip (13) is connected to the lining (6) by a joining connection.

2. Prefabricated part according to claim 1, **characterized in that** the strip (13) is connected to the lining (6) by a weld seam (14).

3. Prefabricated part according to claim 1 or 2, **characterized in that** the fastener/s is/are fibers (15) or threads, preferably made of an artificial material and/or a natural material, in particular made of cotton, and **in that** the fastener/s in the form of fibers (15) or threads is/are arranged in a textile fabric, for example a woven fabric, a felt or a fleece, if applicable.

4. Prefabricated part according to claim 1 or 2, **characterized in that** the fastener/s is/are a pin/s respectively pins and/or one respectively more strap/s and/or a rod respectively rods and/or a wire respectively wires and/or one or more grid/s, and **in that** the fastener/s consist/s of plastic or metal if applicable, respectively **in that** some of the fasteners consist of plastic and some of metal if applicable.

5. Prefabricated part according to one of the claims 1 to 4, **characterized in that** the connecting joint is a socket (7) that is lined at least in some areas, preferably completely, by the molded part (9), or that the connecting joint is a spigot end (8) that is encased by the molded part (10) at least in some areas, preferably completely.

6. Prefabricated part according to one of the claims 1 to 5, **characterized in that** the molded part (9, 10) extends from the inner side (5) of the pipe in the direction of an outer side of the pipe, **in that** it is arranged in the area of the connecting joint on the surface of the concrete body (2), and **in that** it then has, between the connecting joint and the pipe outer side, a closing edge (21) that extends into the concrete body (2) and projects at an angle (α) from the surface (20) of the concrete body (2) into the interior of the concrete body (2).

7. Prefabricated part according to one of the claims 1 to 6, **characterized in that**, in addition to the one pipe end (3, 4) covered at least in some areas by a molded part (9, 10), the other pipe end (4, 3) is also covered at least in some areas by an additional molded part (10), 9) made of a thermosetting plastic material, **in that** the other pipe end (4, 3) has an additional connecting joint in order to connect the other pipe end (4, 3) to one pipe end (4, 3) of an additional prefabricated part (1b, 1a), and **in that** the lining (6) and the additional molded part (10, 9) are connected to each other in a sealed manner.

8. Prefabricated part according to claim 7, **characterized in that** the additional molded part (10, 9) and the lining (6) overlap along an additional overlap area (16), **in that**, in the additional overlap area (16) between the additional molded part (10, 9) and the lining (6), an additional strip (13) of a thermoplastic material is arranged, and **in that** the additional strip (13) is connected to the additional molded part (10, 9) and to the lining (6) in the same manner as the first strip (13).

9. Prefabricated part according to claim 7 or 8, **characterized in that** the additional connecting joint is a socket (7) that is lined at least in some areas, preferably completely, by the additional molded part (10, 9), or **in that** the additional connecting joint is a spigot end (8) that is encased at least in some areas, preferably completely, by the additional molded part (10, 9).

10. Prefabricated part according to one of the claims 1 to 9, **characterized in that** the strip respectively strips (13) is/are arranged in the area of the pipe end (3, 4) respectively, if applicable, the pipe ends (3, 4) on the pipe inner side (5).

11. Prefabricated part according to one of the claims 1 to 10, **characterized in that** the thermosetting plastic is a polyurea and/or the thermoplastic is a polyethylene or polypropylene.

12. Prefabricated part according to one of the claims 1 to 11, **characterized in that** the lining (6) and the strip respectively strips (13), if applicable, are made of the same thermoplastic materials.

13. Prefabricated part according to one of the claims 1 to 12, **characterized in that** the molded parts respectively molded parts (9, 10), if applicable, has respectively have bonding bridges (12, 22) that are anchored in the cured concrete body (2), wherein the bonding bridges are preferably formed from a granulate, for example sand, which is bonded to the molded part/s (9, 10).

14. Shaft, in particular a sewage shaft, having at least two prefabricated parts (1a, 1b) arranged next to each other and connected to each other in each case via a connecting joint, **characterized in that** the two prefabricated parts (1a, 1b) arranged next to each other are designed in accordance with one of the claims 1 to 13, wherein preferably at least one of the prefabricated parts (1a, 1b) arranged next to each other has a socket (7) and the other of the prefabricated parts (1b, 1a) arranged next to each other has a spigot end (8) accommodated therein.

15. Shaft according to claim 14, **characterized in that** a sealing agent (11), for example a sealing cord, is arranged between the socket (7) and the spigot end (8), and **in that** preferably the sealing agent (11) has at least one seal (18) that is/are molded-in respectively preformed onto the molded part (9) of the socket (7) and/or into the molded part (10) of the spigot end (8).

## Revendications

1. Pièce préfabriquée (1a, 1b) avec un corps en béton (2) qui prend la forme d'une section de tuyau avec deux extrémités de tuyau (3, 4) et une face intérieure de tuyau (5), dans laquelle la face intérieure de tuyau (5) est revêtue au moins par zones d'un revêtement (6) en matière thermoplastique lié au corps en béton (2) et au moins une des extrémités de tuyau (3, 4) est recouverte au moins par zones par une pièce moulée (9, 10) faite d'une matière plastique thermodurcissable liée au corps en béton (2), avec, au moins sur l'extrémité de tuyau (3, 4) recouverte au moins par zones, une forme de raccord pour assembler l'extrémité de tuyau (3, 4) à une extrémité de tuyau (4, 3) d'une autre pièce préfabriquée (1b, 1a), le revêtement (6) et la pièce moulée (9, 10) se chevauchant dans une zone de chevauchement (16) et étant liés l'un à l'autre de façon étanche, **caractérisée en ce qu'**une bande (13) faite de matière thermoplastique est disposée dans la zone de chevauchement (16) entre la pièce moulée (9, 10) et le revêtement (6), **en ce que** la bande (13) est reliée à la pièce moulée (9, 10) par un ou plusieurs moyens de liaison qui sont au moins en partie inclus ou logés aussi bien dans la bande (13) que dans la pièce moulée (9, 10) et **en ce que** la bande (13) est liée au revêtement (6) par un assemblage jointé.

2. Pièce préfabriquée selon la revendication 1, **caractérisée en ce que** la bande (13) est liée au revêtement (6) par une soudure (14).

3. Pièce préfabriquée selon la revendication 1 ou 2, **caractérisée en ce que** les moyens de liaison sont des fibres (15) ou des fils, de préférence faits d'une matière synthétique et/ou d'une matière naturelle, en particulier de coton, et **en ce que**, le cas échéant, les moyens de liaison conformés comme des fibres (15) ou des fils sont disposés dans une structure textile à deux dimensions, par exemple un tissu, un feutre ou un non-tissé.

4. Pièce préfabriquée selon la revendication 1 ou 2, **caractérisée en ce que** le ou les moyens de liaison sont une cheville ou des chevilles et/ou un ou plusieurs étriers et/ou une tige ou des tiges et/ou un fil métallique ou des fils métalliques et/ou une ou plusieurs grilles et **en ce que**, le cas échéant, le ou les moyens de liaison se composent de matière plastique ou de métal ou **en ce que**, le cas échéant, certains des moyens de liaison se composent de matière plastique et d'autres de métal.

5. Pièce préfabriquée selon l'une des revendications 1 à 4, **caractérisée en ce que** la forme de raccord est un manchon (7) qui est au moins en partie, de préférence complètement, habillé par la pièce moulée (9), ou **en ce que** la forme de raccord est une extrémité en pointe (8) qui est au moins en partie, de préférence complètement, entourée par la pièce moulée (10).

6. Pièce préfabriquée selon l'une des revendications 1 à 5, **caractérisée en ce que** la pièce moulée (9, 10) s'étend de la face intérieure de tuyau (5) vers une face extérieure du tuyau, **en ce qu'**elle est disposée au niveau de la forme de raccord sur la surface du corps en béton (2) et **en ce qu'**elle présente à la suite de celui-ci, entre la forme de raccord et la face extérieure du tuyau, un bord de terminaison (21) qui entre dans le corps en béton (2) et dépasse sous un angle (α) de la surface (20) du corps en béton (2) à l'intérieur du corps en béton (2).

7. Pièce préfabriquée selon l'une des revendications 1 à 6, **caractérisée en ce que**, en plus de l'extrémité de tuyau (3, 4) recouverte au moins par zones par une pièce moulée (9, 10), l'autre extrémité de tuyau (4, 3) est aussi recouverte au moins par zones par une autre pièce moulée (10, 9) faite de matière plastique thermodurcissable, **en ce que** l'autre extrémité de tuyau (4, 3) présente une autre forme de raccord pour assembler l'autre extrémité de tuyau (4, 3) à une extrémité de tuyau (4, 3) d'une autre pièce préfabriquée (1b, 1a) et **en ce que** le revêtement (6) et l'autre pièce moulée (10, 9) sont liés l'un à l'autre de façon étanche.

8. Pièce préfabriquée selon la revendication 7, **caractérisée en ce que** l'autre pièce moulée (10, 9) et le revêtement (6) se chevauchent le long d'une autre zone de chevauchement (16), **en ce qu'**une autre bande (13) de matière thermoplastique est disposée dans l'autre zone de chevauchement (16) entre l'autre pièce moulée (10, 9) et le revêtement (6) et **en ce que** l'autre bande (13) est liée à l'autre pièce moulée (10, 9) et au revêtement (6) de la même manière que la première bande (13).

9. Pièce préfabriquée selon la revendication 7 ou 8, **caractérisée en ce que** l'autre forme de raccord est un manchon (7) qui est au moins en partie, de préférence complètement, habillé par l'autre pièce moulée (10, 9), ou en ce que la forme de raccord est une extrémité en pointe (8) qui est au moins en partie, de préférence complètement, entourée par l'autre pièce moulée (10, 9).

10. Pièce préfabriquée selon l'une des revendications 1 à 9, **caractérisée en ce que** la respectivement, le cas échéant, les bande/s (13) est/sont disposée/s au niveau de l'extrémité de tuyau (3, 4) respectivement, le cas échéant, des extrémités de tuyau (3, 4) sur la face intérieure de tuyau (5).

11. Pièce préfabriquée selon l'une des revendications 1 à 10, **caractérisée en ce que** la matière plastique thermodurcissable est une polyurée et/ou la matière thermoplastique est un polyéthylène ou un polypropylène.

12. Pièce préfabriquée selon l'une des revendications 1 à 11, **caractérisée en ce que** le revêtement (6) et la respectivement, le cas échéant, les bande/s (13) se composent des mêmes matières thermoplastiques.

13. Pièce préfabriquée selon l'une des revendications 1 à 12, **caractérisée en ce que** la respectivement, le cas échéant, les pièce/s moulée/s (9, 10) comporte respective comportent des ponts d'adhérence (12, 22) qui sont ancrés dans le corps en béton (2) durci et qui sont de préférence formés par des granulés liés à la/les pièce/s moulée/s (9, 10), par exemple de sable.

14. Cheminée de visite, en particulier cheminée de visite pour canalisation d'eaux usées, avec au moins deux pièces préfabriquées (1a, 1b) superposées et reliées entre elles par une forme de raccord chacune, **caractérisée en ce que** les deux pièces préfabriquées (1a, 1b) superposées sont réalisées selon l'une des revendications 1 à 13, l'une des pièces préfabriquées (1a, 1b) superposées comportant de préférence un manchon (7) et l'autre pièce préfabriquée (1b, 1a) une extrémité en pointe (8) logée à l'intérieur.

15. Cheminée de visite selon la revendication 14, **caractérisée en ce qu'**au moins une des pièce préfabriquées (1a, 1b) superposées comporte un manchon (7) et l'autre des pièces préfabriquées (1b, 1a) superposées une extrémité en pointe (8) logée à l'intérieur, **en ce qu'**un moyen d'étanchéité (11), par exemple un cordon d'étanchéité, est disposé entre le manchon (7) et l'extrémité en pointe (8) et **en ce que** le moyen d'étanchéité (11) comporte de préférence au moins un joint d'étanchéité (18) qui est/sont formé/nt respectivement moulé/nt dans la pièce moulée (9) du manchon (7) et/ou la pièce moulée (10) de l'extrémité en pointe (8).
